Europäisches Patentamt

European Patent Office

Office européen des brevets

(11) Publication number: **0 053 231**
A1

# EUROPEAN PATENT APPLICATION

(21) Application number: 81107639.7

(22) Date of filing: 25.09.81

(51) Int. Cl.³: **A 47 L 15/23, G 01 P 3/488**

(30) Priority: 28.11.80 IT 4574280

(43) Date of publication of application: 09.06.82
Builetin 82/23

(84) Designated Contracting States: **AT BE CH DE FR GB LI NL SE**

(71) Applicant: **ZELTRON ISTITUTO ZANUSSI PER L'ELETTRONICA S.P.A., Via Principe di Udine, 66, I-33030 Campoformido Udine (IT)**

(72) Inventor: **Boscolo, Antonio, Via Angelo Emo 33/2, I-34144 Trieste (IT)**
Inventor: **Milanese, Nadia, Via Feltre, 4, I-33170 Pordenone (IT)**

(74) Representative: **Giugni, Valter et al, c/o Industrie Zanussi S.p.A. Servizio Brevetti e Documentazione Viale Treviso 15, I-33170 Pordenone (IT)**

(54) **Dishwasher with a control device for monitoring the rotation of the spray arms.**

(57) In a dishwasher having at least one rotary spray arm, a control device is provided for monitoring the rotation of the said spray arm. A detecting coil (8) is fixed to the machine, can be electromagnetically coupled with the spray arm (6) when it lies within a given area of its rotation stroke, and is connected in the electric circuit of a generator (9) for varying the output signal thereof when the coil is coupled with the spray arm. The output of the generator drives, through a differentiating circuit (11), a discrete integrator (12) whose binary output signal changes its logic level whenever the spray arm enters and leaves said area of its rotation stroke with a speed which is at least equal to a predetermined value.

The binary signal may drive an indicator of the rotational speed of the spray arm.

- 1 -

## DESCRIPTION

DISHWASHER WITH A CONTROL DEVICE FOR
MONITORING THE ROTATION OF THE SPRAY ARMS.

The present invention relates to automatic dishwashing machines, particularly of domestic type.

As is known, these machines are usually provided with at least one spray arm capable of spraying onto the crockery detergent liquid which is supplied by a circulating pump. For an even distribution of the washing sprays, the spray arms rotate by jet-propulsion, around a central axis, thanks to respective rotary joints by means of which they are connected to the remainder of the hydraulic circuit of the machine.

It is possible, e.g. in case of a faulty operation of the circulating pump or a disorderly arrangement of the crockery on the support baskets, that the rotation of the spray arms is hampered (with a substantial lowering of their angular speed) or prevented at all. As is known, in these cases the washing operation of the dishwasher is substantially ineffective and deposits may easily build up in correspondence of the rotary joints which are hardly removable and further cooperate to prevent the rotation of the spray arms.

In order to warn the user of a possible sticking or eccessive deceleration of the spray arms, a dishwasher has been provided having a control device including proximity detecting means associated with each spray arm and capable of generating electric pulses at a rate which is proportional to the rotational speed of the same spray arms. The frequency of the electric pulses is compared with a reference frequency in a comparator which generates a warning signal when the difference between the above mentioned frequencies exceeds a predetermined value. The detecting means is in contact with the wash tub of the machine and is of the kind, known per sè, including a permanent magnet and a coil; its coupling with the spray arms is obtained by fitting on these latters a ferromagnetic element. As is known, the temperature within the wash tub of a dishwasher has substantially high values, even more than 70°C. This high temperature may easily cause the permanent magnet to become demagnetized, affecting in this way the operation of the whole control device. In any case, it is necessary to fit to the spray arms at least one ferromagnetic element, as stated above, with the result of an undesired complication in the construction of the machine, which requires a further working phase for obtaining the finished spray arms.

Moreover, the detecting means of the kind described above may cause, due to the magnetic field generated by the permanent magnet, a braking effect on the spray arms which is, of course, undesirable. Furthermore, it is known that the electric signal generated by the coil of a proximity detector of the kind mentioned above is substantially affected. by variable parasitic magnetic fields like those which are produced by the electric motors usually provided in dishwashers; therefore, the whole control device is unreliable.

It is the aim of the present invention to provide a dishwashing machine having a control device for monitoring the rotation of the spray arms, which device is of simple construction, is reliable under different operating conditions and does not require any special working for modifying the standard devices usually provided in the machine, particularly the spray arms to be monitored.

According to the invention, this aim is attained in a dishwashing machine having at least one rotary spray arm and a control device for monitoring the rotation of the said spray arm, characterized in that the control device comprises a detecting coil which is fixed to the machine, can be electromagnetically coupled with the spray arm when it lies within a given area of its rotation stroke, and is connected in the electric circuit of a generator for varying the output signal thereof when the coil is coupled with the spray arm. The output of the generator drives, through a differentiating circuit, a discrete integrator whose output binary signal changes its logic level whenever the spray arm enters and leaves said area of its rotation stroke with a speed which is at least equal to a predetermined value.

Thus, the control device forms a dynamic transducer of the rotational speed of the spray arm which cannot be substantially affected by noise signals and can be easily associated to whatever warning device, both of the active and passive type, capable of indicating a possible faulty operation of the spray arm.

The invention will be further described by way of non-limiting example, with reference to the accompanying drawings in which:

Figure 1 diagrammatically shows a cross-section of a dishwasher according to the invention, wherein only some basic components are indicated;

Figure 2 shows the block diagram of a preferred embodiment of the control device provided in the dishwasher according to the invention;

Figures 3 to 6 show respective waveforms of some electric signals which are produced at different points of the block diagram of Figure 2.

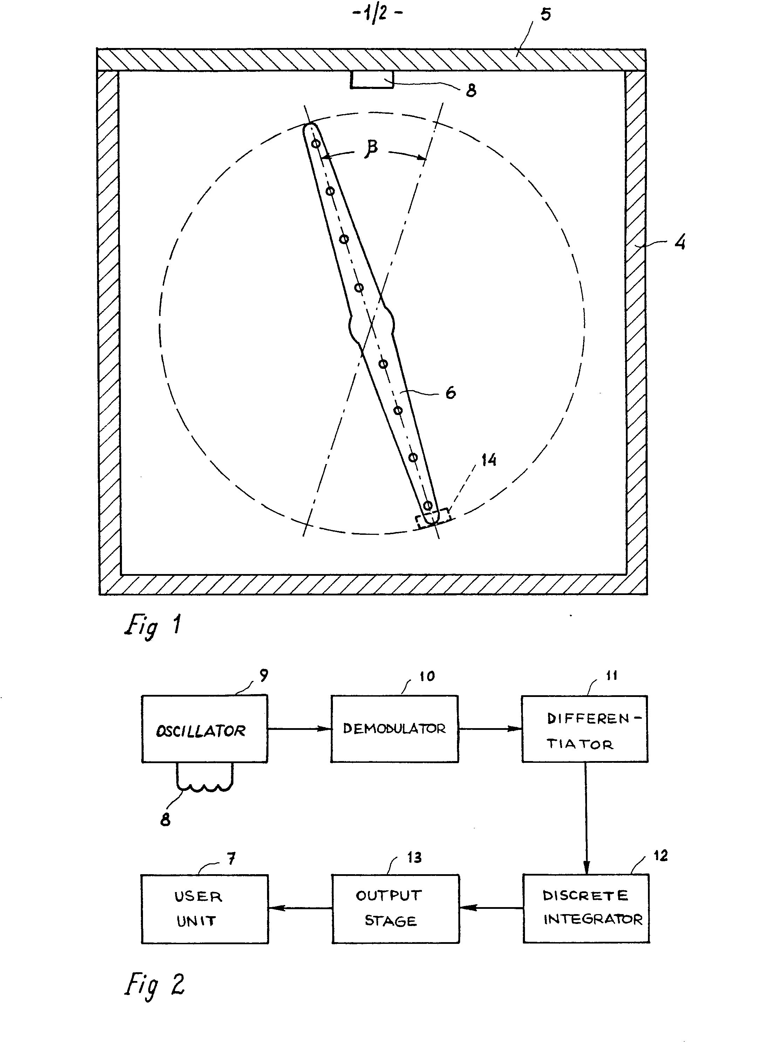

With reference to Figure 1, the dishwashing machine according to the invention comprises a wash tub 4 which can be water-tight closed by means of an access door 5. Within the tub 4 at least one rotary spray arm 6, preferably made of metal, such as stainless steel, is provided beneath an associated basket (not shown) which is capable of supporting crockery.

The dishwasher is provided with a control device for monitoring the rotation of the spray arm 6, the electronic components of which device (descri bed in detail hereinafter) are thermally insulated and packed in correspondence of the control panel (not shown) of the machine.

The said control device includes one detec ting coil 8 for each spray arm 6 to be monitored. Preferably, the coil is made of copper wire, has a small number (e.g. 150) of turns and is completely covered with insulating material, e.g. polycarbonate or the like. The coil has small overall dimensions and is fixed to the machine, preferably in correspon dence of the door 5, so as to extend within the wash tub with its axis lying on the plane of rotation (e.g. in a clockwise direction) of the spray arm 6. The size and location of coil 8 are such that when the spray arm is positioned along the axis of the coil, the facing ends of the two elements are spaced apart from each other by about 15 mm. Further more, when the spray arm 6 lies within a given area of its rotation stroke defined by an angle ß , an electromagnetic coupling occurs between spray arm 6 and coil 8.

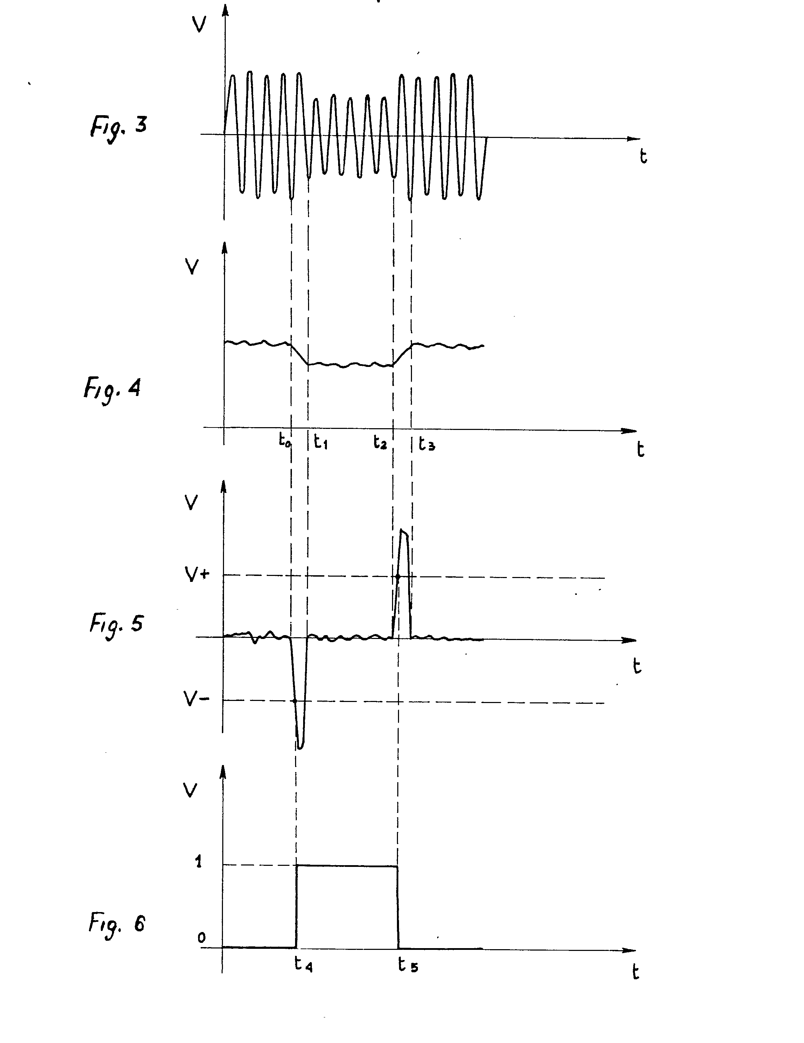

As shown in Figure 2, the coil 8 is connec ted in the circuit of an electric signal generator, e.g. an oscillator 9. The oscillator is capable of generating a sine-wave output signal having predeter mined frequency and amplitude values. The output of the oscillator 9 drives a demodulator stage 10 that in turn drives, through a differentiator stage 11 (preferably comprising an active high-pass filter), a discrete integrator stage 12, such as a symmetric hysteresis comparator. For example, the discrete integrator 12 may consist of a circuit known in the art as "Schmitt comparator", having a positive and a negative threshold value, as well as a reference input (not shown) and a drive input; as shown in Figure 2, this latter input is connected with the differentiator 11. The above positive and negative threshold values are respectively indicated with V+ and V- in Figure 5.

As is known, the output signal of the integrator 12 is a binary signal and can be used for controlling, through an output stage 13, a user unit 7. For example, the output stage 13 may comprise a relay, a TRIAC, or any suitable controllable amplifier.

The user unit 7 may be of different kinds; for example, it may consist of a simple display, such as a lamp, or (removing in this case stage 13) a more or less complex active apparatus, associated with the programmer of the dishwasher and capable of operating the mains switch of the machine in order to stop automatically the operation thereof.

When the dishwasher is carrying out a washing or rinsing cycle, the motion of the metal spray arm 6 through the electromagnetic field which is generated by coil 8 causes a change in the same field, with the result of a corresponding amplitude modulation (a few mV) of the signal which is generated by oscillator 9.

Such a modulation occurs whenever spray arm 6 is coupled with the detecting coil, that is about every 180° of rotation, and lasts all the time the spray arm lies within the area of its rotation stroke which is defined by angle ß .

The modulated output signal of oscillator 9 is shown in Figure 3. This signal is demodulated in the stage 10, at the output of which is therefore produced an envelope signal, as shown in Figure 4.

It can be noted that the envelope signal includes noise components which are due, basically, to vibrations of the walls of the wash tub, thermal changes and, in general, to physical variations of the environment to which the detecting coil 8 is subjected.

The period to - t3 represents the time during which spray arm 6 lies within angle ß (Figure 1), whereas periods to - t1 and t2 - t3 represent the transients during which the spray arm enters and leaves, respectively, the area of its rotation stroke defined by the same angle ß   .

Thus, the momentary speed of the spray arm during the above two transients is substantially proportional to the slope of the curve shown in Figure 4, during periods to - t1 and t2 - t3 respectively.

By means of the differentiating operation performed by stage 11, the envelope signal is converted into a signal as shown in Figure 5, wherein the transients to - t1 and t2 - t3 are transformed into respective pulses, particularly one negative and one positive pulse, whose amplitude is directly proportional to the respective momentary values of the rotational speed of the spray arm 6.

This differentiating operation enables the useful signal (that is the said pulses) to be emphasized with respect to the noise components, with the result of a high sensitivity of the whole control device of the dishwasher, in spite of the low coupling coefficient between the spray arm and the detecting coil.

In operation, it is supposed that the output signal of comparator 12 initially has the logic level "0".

If the rotational speed of the spray arm 6 to be monitored is sufficiently high, the output signal of the differentiating circuit 11 has at time t4 (as shown in Figure 5) an amplitude which exceeds the negative threshold value V- of comparator 12, whose output signal switches then to the logic level "1". This logic level lasts until the amplitude of the signal shown in Figure 5 exceeds at time t5 the positive threshold value V+ of comparator 12, whose output signal switches again to the logic level "0", as shown in Figure 6.

Therefore, when the spray arm 6 operates correctly the output signal of comparator 12 has the shape of a square wave, which drives the user unit 7 through the output stage 13. In the elementary case in which the user unit consists of a lamp, this latter will indicate the correct rotation of the spray arm with a regular train of ON-OFF switchings.

Now, it is considered the case in which the rotational speed of spray arm 6 is too low or the spray arm stops in whatever angular position, for example within angle ß . The spray arm keeps being coupled with the detecting coil and at time t5 the amplitude of the output signal of differentia tor 11 does not reach the threshold value V+ of comparator 12, whose output signal keeps, thus, having the logic level "1". Therefore, the lamp 7 keeps being switched on (or off, as the case may be), signalling in this way the faulty operation of the monitored spray arm.

In conclusion, · the dishwashing machine according to the invention can automatically warn, with high sensitivity, of a rotational speed of the spray arm 6 which is lower than a predetermined va lue, this latter being adjustable by varying the threshold values of the symmetric hysteresis compa rator 12.

Besides the advantages already stated abo ve, the dishwashing machine according to the inven tion does not require any substantial modification of the spray arm to be monitored. Moreover, no ther mal compensation for the electronic components is necessary, because only coil 8 is subjected to stres ses that do not affect however, the reliability the reof.

From the foregoing description it is appa rent that the detecting means for monitoring the rotation of the spray arm does not need any magnetic member, so it cannot be affected by the thermal stresses to which it is subjected.

Another advantage of the dishwashing machine according to the invention is the fact that the control device is insensitive to parasitic electromagnetic fields having relatively low frequencies, like those which are induced from the supply mains, as the detecting coil operates rather at reletively high frequencies.

Finally, thanks to the high sensitivity of the control device, the detecting coil may be of small size and therefore can be mounted in a simple way inside the dishwasher.

Of course, the dishwasher described above may undergo many modifications.

As already stated, for example, the output signal of comparator 12 may drive a more complex user unit, which does not fall within the scopes of the invention and is not described.

Furthermore, the at least one spray arm 6 may be made of plastics material , instead of steel. In order to obtain also in this case the necessary electromagnetic coupling between the detecting coil and the spray arm, this latter is advantageously provided, in correspondence of at least one of its ends, of a suitable metal body 14 (shown with dotted line in Figure 1). Of course, one should bear in mind that, if the metal body is fixed to only one of the ends of the spray arm, its coupling with the detecting coil will occur every rotation of about 360°, instead of 180°.

CLAIMS

1. Dishwashing machine, having at least one rotary spray arm and a control device for monitoring the rotation of the said spray arm, characterized in that the control device comprises a detecting coil (8) which is fixed to the machine, can be electromagnetically coupled with the spray arm (6) when it lies within a given area of its rotation stroke, and is connected in the electric circuit of a generator (9) for varying the output signal thereof when the coil is coupled with the spray arm, the output of the generator driving, through a differentiating circuit (11), a discrete integrator (12) whose output binary signal (Figure 6) changes its logic level whenever the spray arm enters and leaves said area of its rotation stroke with a speed which is at least equal to a predetermined value.

2. Dishwashing machine according to claim 1, characterized in that the output of the generator (9) is connected with the input of said differentiating circuit (11) through a demodulator stage (10).

3. Dishwashing machine according to claim 1, characterized in that said discrete integrator (12) comprises a symmetric hysteresis comparator.

0053231

Fig 1

Fig 2

0053231

Fig. 3

Fig. 4

$t_0$ $t_1$ $t_2$ $t_3$

Fig. 5

V+

V-

Fig. 6

1

0

$t_4$ $t_5$

## DOCUMENTS CONSIDERED TO BE RELEVANT

| Category | Citation of document with indication, where appropriate, of relevant passages | Relevant to claim |
|---|---|---|
| Y | GB - A - 1 566 396 (HUGHES)<br><br>* the entire document * | 1,2,3 |
| Y | FR - A - 2 442 618 (INDESIT)<br><br>* claim 1 * | 1 |
| A | DE - A - 2 831 598 (BOSCH)<br><br>* page 9 abstract * | 1,2 |
| A | DE - A - 1 235 643 (TELEFUNKEN)<br><br>* the entire document * | 1,2,3 |
| A | CH - A - 532 143 (ZELLWEGER A.G.)<br><br>* the entire document * | 1,2,3 |
| A | FR - A - 2 181 554 (COMPAGNIE ELECTRO-MECANIQUE)<br><br>* page 1, line 35 - page 2, line 28; page 3, lines 27-39 * | 1,2 |
| A | FR - A - 2 209 105 (DJIAN)<br><br>* claims 1,7,8; figure 1 * | 1,2,3 |

---------

The present search report has been drawn up for all claims

| Place of search The Hague | Date of completion of the search 04-03-1982 | Examiner SCHARTZ |
|---|---|---|

**CLASSIFICATION OF THE APPLICATION (Int. Cl. 3)**

A 47 L 15/23
G 01 P 3/488

**TECHNICAL FIELDS SEARCHED (Int.Cl. 3)**

A 47 L
G 01 P

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document

EPO Form 1503.1 06.78